**Europäisches Patentamt**

**European Patent Office**

**Office européen des brevets**

(19)

(11) Veröffentlichungsnummer : **0 363 309 B1**

(12) # EUROPÄISCHE PATENTSCHRIFT

(45) Veröffentlichungstag der Patentschrift :
**01.04.92 Patentblatt 92/14**

(51) Int. Cl.$^5$ : **F03B 1/00, F03B 11/00**

(21) Anmeldenummer : **89810608.3**

(22) Anmeldetag : **16.08.89**

(54) Peltonturbine.

(30) Priorität : **06.10.88 CH 3714/88**

(43) Veröffentlichungstag der Anmeldung :
**11.04.90 Patentblatt 90/15**

(45) Bekanntmachung des Hinweises auf die
Patenterteilung :
**01.04.92 Patentblatt 92/14**

(84) Benannte Vertragsstaaten :
**BE DE ES GB SE**

(56) Entgegenhaltungen :
**DE-C- 12 314**
**DE-C- 319 779**
**DE-C- 615 445**

(73) Patentinhaber : **GEBRÜDER SULZER AKTIENGESELLSCHAFT**
**Zürcherstrasse 9**
**CH-8401 Winterthur (CH)**

(72) Erfinder : **Erlach, Josef**
**Gustav-Werner-Strasse 7**
**W-7980 Ravensburg-Oberzell (DE)**

**Beschreibung**

Die Erfindung bezieht sich auf eine Peltonturbine bestehend aus einem Turbinenrad mit Radscheibe und Bechern, das in einem Gehäuse mit einer Antriebswelle gelagert ist und durch mindestens einen Triebflüssigkeitsstrahl aus einer Hochdruckdüse tangential beaufschlagt wird, wobei das Gehäuse einen Flüssigkeitsablauf aufweist. Eine derartige Turbine ist von der DE-615 445 bereits bekannt.

Peltonturbinen werden als Antrieb zur Stromerzeugung mit Generatoren oder als Direktantrieb für Arbeitsmaschinen eingesetzt. Durch die Impulsumkehr des Triebflüssigkeitsstrahls an den Bechern wird mechanische Leistung an das Turbinenrad abgegeben. Im Falle der Stromerzeugung geschieht die Leistungsabgabe bei konstanter Drehzahl. Die in den Bechern umgelenkte Triebflüssigkeit fällt in einen tiefer liegenden Sumpf und spritzt dabei teilweise an die Gehäusewand. Der Wirkungsgrad einer Peltonturbine hängt erheblich davon ab, wie gut es gelingt vagabundierendes Spritzwasser vom Turbinenrad und den Bechern fernzuhalten. Bekannt sind Anwendungen bei denen bei horizontaler Lage der Antriebswelle und bei einer Beaufschlagung im unteren Bereich des Turbinenlaufrades der obere Bereich vertikale Bleche parallel zur Laufradebene und horizontale Bleche gegenüber der Hochdruckdüse aufweisen, um das Spritzwasser daran zu hindern, in den oberen Gehäusebereich zu gelangen.

Bei Peltonturbinen, die mit variabler Drehzahl als Antrieb für Arbeitsmaschinen eingesetzt werden, führen diese üblichen Einbauten zu keinen befriedigenden Ergebnissen. Einmal ändern die Ablaufbedingungen aus den Bechern wegen der grossen aber notwendigen Drehzahl- und Lastschwankungen und verursachen recht unterschiedliche Spritzflüssigkeitsverhältnisse. Zum anderen fallen sehr unterschiedliche Flüssigkeitsmengen an, die mit grossen Stauhöhen konstruktiv berücksichtigt werden müssen, um grosse Mengen abführen zu können, ohne dass das Turbinenrad in dem Sumpf eintaucht. Günstige Verhältnisse, d.h. günstige Wirkungsgrade lassen sich nur in engen Grenzen bei annähernd konstanten Bedingungen erzielen.

Hier will die Erfindung Abhilfe schaffen, indem das Gehäuse mindestens eine Zwischenwand aufweist, die den Innenraum quer zum Turbinenrad in einen Spritzflüssigkeit- und Ablaufbereich, sowie in einen Ventilationsbereich unterteilen. Mit der eng an das Turbinenrad herangeführten Zwischenwand wird die Spritzflüssigkeit ohne Reflexionen von der Radscheibe und den Bechern unter unterschiedlichen Drehzahl- und Lastbedingungen wirkungsvoll getrennt und dem Flüssigkeitssumpf zugeführt. Mehr als die Hälfte des Turbinenrades dreht im relativ trockenen Ventilationsbereich, so dass gesamthaft geringe Dissipationsverluste und gute Wirkungsgrade entstehen. Die von Drehzahl und Last abhängigen Wirkungsgradkennlinien sind hoch und verlaufen flacher als in den bis anhin bekannten Anwendungen. Durch Anbringen einer Belüftung im Ventilationsbereich und Schaffen eines gezielt grösseren Durchbruchs beim Eintritt der Becher in den Spritzflüssigkeit- und Ablaufbereich werden die mit dem Turbinenrad mitrotierenden Gasmassen zum Aufbau eines Druckkissens über dem Flüssigkeitssumpf genutzt, was den Auslauf der Flüssigkeit speziell bei grossen Drehzahlen wirksam unterstützt. Konstruktiv lässt sich dieser Vorteil bei der Dimensionierung des Flüssigkeitsablaufes berücksichtigen, indem die notwendige Stauhöhe reduziert wird, was die Bauhöhe verringert. Die Wirkung der Ventilation des Turbinenrades ist so hoch, dass der Flüssigkeitsablauf über Hindernisse hinweggeführt werden kann, die höher als der Flüssigkeitsspiegel im Sumpf der Turbine sind. Dieser Effekt wird nocheinmal gesteigert, wenn das Gehäuse im Ventilationsbereich einen doppelten Leitkanal erhält, der über eine beschränkte Länge am Umfang des Turbinenrades das radial austretende Gas für eine weitere Beschleunigung zu den Füssen der Becher zurückführt. Die so zusätzlich gewonnene kinetische Energie kann in Druck umgesetzt werden.

Die Erfindung wird im folgenden anhand von einem Ausführungsbeispiel im Zusammenhang mit der Zeichnung näher erläutert.

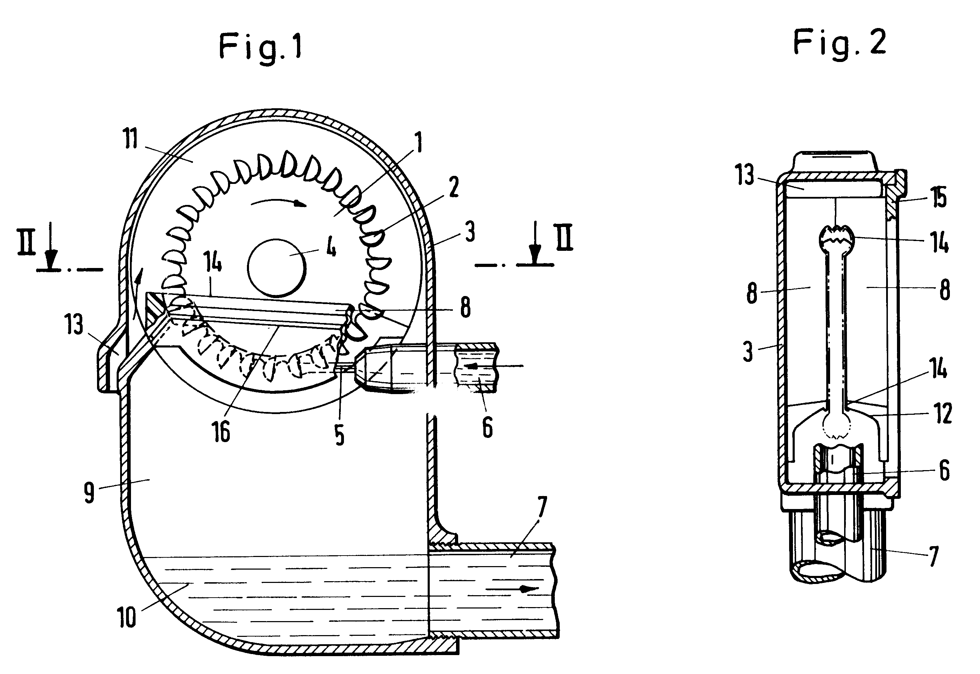

Fig. 1 ist schematisch die Ansicht einer Peltonturbine, wobei ein Teil vom Gehäuse weggebrochen ist;

Fig. 2 ist ein horizontaler Schnitt durch ein Turbinengehäuse gemäss Fig. 1 mit Blick auf die Zwischenwand, wobei die Kontur vom darüberliegenden Turbinenrad im Bereich der Zwischenwand angedeutet ist und

Fig. 3 ist schematisch ein radialer Schnitt durch Gehäuse und Turbinenrad im Ventilationsbereich, wobei ein zusätzlicher Leitkanal zur Erhöhung der Ventilation gezeigt ist.

In den Figuren ist eine Peltonturbine mit einem Turbinenrad mit Radscheibe 1 und Bechern 2, das in einem Gehäuse 3 mit einer Antriebswelle 4 gelagert ist und durch einen Triebflüssigkeitsstrahl 5 aus einer Hochdruckdüse 6 tangential beaufschlagt wird, wobei das Gehäuse 3 einen Flüssigkeitsablauf 7 besitzt, dargestellt. Drehrichtung, Flüssigkeitsströme und Belüftung sind durch Pfeile markiert. Erfindungsgemäss weist das Gehäuse 3 quer zum Turbinenrad 1 eine geteilte Zwischenwand 8 auf, die den Innenraum in einen Spritzflüssigkeit- und Ablaufbereich 9, in dem die Flüssigkeit aus den Bechern 2 in einen tieferliegenden Sumpf 10 fällt und Restflüssigkeit von der Radscheibe 1 und den Bechern 2 abgestreift wird, sowie in einen Ventilationsbereich 11 unterteilt, in dem das Turbinenrad an Luft dreht. Ein Belüftungsanschluss 13, der mit der Umgebungsluft verbunden ist, mündet im Ventilationsbereich 11 in das Gehäuse 3 unmittelbar dort, wo die Becher 2 den Spritzflüssigkeit- und Ablaufbereich 9 verlassen haben. Die Zwischenwand 8 bildet beim Uebergang der Becher 2 vom Ventilationsbereich 11 in den Spritzflüssigkeit- und Ablaufbereich 9 einen grösseren parabelähnlichen Durchbruch 12 mit Scheitel an der Radscheibe, während die restliche Kontur der Zwischenwand 8 mit sehr engem Spiel 14 der Kontur des drehenden Turbinenrades mit Radscheibe 1 und den Bechern 2 folgt. Die Zwischenwand 8 ist ausserhalb des Durchbruchs 12 und der Aussparung für das Turbinenrad über die Weichdichtung 16 dichtend mit dem Gehäuse 3 verbunden. Auf ihrer Unterseite zum Spritzflüssigkeits- und Ablaufbereich 9 weist die Zwischenwand 8 eine von den Bechern 2 abstehende Wölbung zum Ableiten des Spritzwassers auf, während die Oberseite seitlich vom Turbinenrad zur Gehäusewand 3 und in Richtung zum Durchbruch 12 abfällt. Die Zwischenwand 8 ist beim Uebergang der Becher 2 vom Spritzflüssigkeit- und Ablaufbereich 9 in den Ventilationsbereich 11 so dick ausgeführt, dass immer ein Becher 2 in den Bereich der dichtenden Kontur eintaucht bevor der davorliegende Becher 2 die dichtende Kontur der Zwischenwand 8 verlässt.

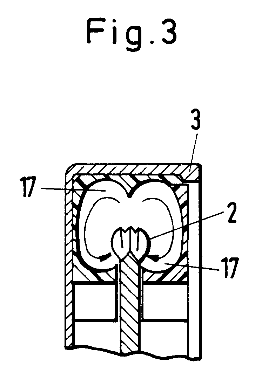

Zur Erhöhung der Ventilationswirkung kann im Ventilationsbereich 11 ein doppelter Leitkanal 17 eingebaut werden, wie er in Fig. 3 gezeigt ist.

## Patentansprüche

1. Peltonturbine bestehend aus einem Turbinenrad mit Radscheibe (1) und Bechern (2), das in einem Gehäuse (3) mit einer Antriebswelle (4) gelagert ist und durch mindestens einen Triebflüssigkeitsstrahl (5) aus einer Hochdruckdüse (6) tangential beaufschlagt wird, wobei das Gehäuse (3) einen Flüssigkeitsablauf (7) besitzt, dadurch **gekennzeichnet,** dass das Gehäuse (3) mindestens eine Zwischenwand (8) aufweist, die den Innenraum quer zum Turbinenrad in einen Spritzflüssigkeit- und Ablaufbereich (9) sowie in einen Ventilationsbereich (11) unterteilt.

2. Peltonturbine nach Anspruch 1, dadurch gekennzeichnet, dass die Zwischenwand (8) etwa ein Drittel des Radumfanges im Raum zwischen dem Triebflüssigkeitsstrahl (5) und der Antriebswelle (4) für den Spritzflüssigkeit- und Ablaufbereich (9) abtrennt.

3. Peltonturbine nach Anspruch 1 oder 2, dadurch gekennzeichnet, dass ein Belüftungsanschluss (13) im Ventilationsbereich (11) in das Gehäuse (3) einmündet.

4. Peltonturbine nach einem der Ansprüche 1 bis 3, dadurch gekennzeichnet, dass die Zwischenwand (8) beim Eintritt der Becher (2) vom Ventilationsbereich (11) in den Spritzflüssigkeit- und Ablaufbereich (9) einen grösseren Durchbruch (12) um die Kontur der Becher aufweist, während das Spiel (14) der Zwischenwand (8) zur restlichen Kontur der rotierenden Radscheibe (1) und Becher (2) in einem Wert der Grössenordnung von 5 % der Breite der Becher (2) und kleiner ausgeführt ist.

5. Peltonturbine nach einem der Ansprüche 1 bis 4, dadurch gekennzeichnet, dass die Zwischenwand (8) am Austritt der Becher (2) aus dem Spritzflüssigkeit- und Ablaufbereich (9) so dick ist, dass immer mindestens ein Becher (2) in seiner Kontur mit einem Spiel (14) umgeben ist.

6. Peltonturbine nach einem der Ansprüche 1 bis 5, dadurch gekennzeichnet, dass die Zwischenwand (8) berührungslose Dichtungsmittel zur Erzeugung des Spiels (14) zum Turbinenrad aufweist.

7. Peltonturbine nach einem der Ansprüche 1 bis 6, dadurch gekennzeichnet, dass die Zwischenwand (8) ausserhalb vom Durchbruch (12) und der Aussparung für das Turbinenrad dichtend mit dem Gehäuse (3) verbunden ist.

8. Peltonturbine nach einem der Ansprüche 1 bis 7, dadurch gekennzeichnet, dass die Zwischenwand (8) im Spritzflüssigkeit- und Ablaufbereich (9) eine von den Bechern (2) wegstehende Wölbung zum Ableiten des Spritzwassers aufweist und im Ventilationsbereich (11) eine vom Turbinenrad weg abfallende Dachform annimmt, die zum Durchbruch (12) hin eine abfallende Schräge besitzt.

9. Peltonturbine nach einem der Ansprüche 1 bis 8, dadurch gekennzeichnet, dass die Zwischenwand (8) aus Kunststoff ausgeführt ist.

10. Peltonturbine nach einem der Ansprüche 1 bis 8, dadurch gekennzeichnet, dass die Zwischenwand (8) als integrierender Bestandteil vom Gehäuse (3) und/oder Gehäusedeckel (15) ausgeführt ist.

11. Peltonturbine nach einem der Ansprüche 1 bis 10, dadurch gekennzeichnet, dass im Ventilationsbereich (11) in Umlaufrichtung des Turbinenrades ein doppelter Leitkanal (17) im Bereich der Becher (2) eingebaut ist, der den radial austretenden Gasstrom umlenkt und im Bogen zu den Füssen der Becher (2) zurücklenkt.

12. Verfahren zum Betrieb einer Peltonturbine nach Ansprüchen 1 bis 11, dadurch gekennzeichnet, dass ihr Einsatz mit variabler Drehzahl und/oder mit variablem Lastmoment erfolgt.

## Claims

1. A Pelton turbine comprising a turbine wheel having a rim (1) and buckets (2), the wheel being mounted in a casing (3) by means of a drive shaft (4) and being supplied tangentially by at least one driving liquid stream (5) from a high-pressure nozzle (6), the casing (3) having a liquid outlet (7), characterised in that the casing (3) has at least one partition (8) subdividing the interior transversely of the wheel into a spray liquid and discharge zone (9) and a ventilation zone (11).

2. A turbine according to claim 1, characterised in that the partition (8) separates off for the spray liquid and discharge zone (9) approximately one-third of the wheel periphery in the space between the driving liquid stream (5) and the drive shaft (4).

3. A turbine according to claim 1 or 2, characterised in that a ventilation connection (13) extends into the casing (3) in the ventilation zone (11).

4. A turbine according to any of claims 1 to 3, characterised in that in the zone where the buckets (2) pass from the ventilation zone (11) into the spray liquid and discharge zone (9), the partition (8) has a relatively large cutaway (12) around the contour of the buckets while the clearance (14) between the partition (8) and the remaining contour of the rotating rim (1) and buckets (2) is of the order of magnitude of at most 5% of the width of the buckets (2).

5. A turbine according to any of claims 1 to 4, characterised in that in the zone where the buckets (2) emerge from the spray liquid and discharge zone (9) the partition (8) is so thick that there is always a clearance (14) around the contour of at least one bucket (2).

6. A turbine according to any of claims 1 to 5, characterised in that the partition (8) has contactless sealing means for leaving the clearance (14) between itself and the turbine wheel.

7. A turbine according to any of claims 1 to 6, characterised in that the partition (8) is sealingly connected to the casing (3) outside the cutaway (12) and the recess for the wheel.

8. A turbine according to any of claims 1 to 7, characterised in that the partition (8) has in the spray liquid and discharge zone (9) a curvature which extends away from the buckets (2) and which serves to deflect the spray water, the partition (8) having in the ventilation zone (11) a roof shape which drops away from the wheel and which descends at an inclination towards the cutaway (12).

9. A turbine according to any one of claims 1 to 8, characterised in that the partition (8) is made of plastics.

10. A turbine according to any of claims 1 to 8, characterised in that the partition (8) is an integral part of the casing (3) and/or casing cover (15).

11. A turbine according to any of claims 1 to 10, characterised in that a double guide channel (17) is provided near the buckets (2) in the ventilation zone (11) in the direction of rotation of the wheel, deflects the radially issuing gas stream and deflects it back in the curve to the roots of the buckets (2).

12. A method of operating a Pelton turbine according to claims 1 to 11, characterised in that the turbine is used at variable speed and/or with a variable load torque.

## Revendications

1. Turbine Pelton constituée par une roue de turbine avec un disque (1) et des augets (2) montée dans un carter (3) avec un axe d'entraînement (4) et soumise à la pression tangentielle d'au moins un jet de liquide opérationnel (5) provenant d'une buse haute pression (6) et dont le carter (3) présente une évacuation de liquide (7), caractérisée en ce que le carter (3) présente au moins une cloison (8) qui compartimente l'espace intérieur transversalement à la roue de turbine en une zone d'injection et d'évacuation de liquide (9) et en une zone de ventilation (11).

2. Turbine Pelton suivant la revendication 1, caractérisée en ce que la cloison (8) isole environ un tiers du volume de la roue dans l'espace compris entre le jet de liquide opérationnel (5) et l'axe d'entraînement (4) pour la zone d'injection et d'évacuation du liquide (9).

3. Turbine Pelton suivant la revendication 1 ou 2, caractérisée en ce qu'un raccord de ventilation (13) prévu dans la zone de ventilation (11) débouche dans le carter (3).

4. Turbine Pelton suivant l'une quelconque des revendications 1 à 3, caractérisée en ce que la cloison (8) présente une ouverture (12) plus large autour du contour des augets à l'entrée des augets (2) venant de la zone de ventilation (11) dans la zone d'injection et d'évacuation de liquide (9), tandis que le jeu (14) de la cloison (8) par rapport au reste du contour du disque de roue (1) et des augets (2) en rotation a une valeur de l'ordre de 5 % de la largeur des augets (2) et est plus petit.

5. Turbine Pelton suivant l'une quelconque des revendications 1 à 4, caractérisée en ce que la cloison (8) est tellement épaisse à la sortie des augets (2) de la zone d'injection et d'évacuation de liquide (9) que le contour d'au moins un auget (2) est toujours entouré d'un jeu (14).

6. Turbine Pelton suivant l'une quelconque des revendications 1 à 4, caractérisée en ce que la cloison (8) présente des moyens d'étanchéité sans contact pour produire le jeu (14) par rapport à la roue de turbine.

7. Turbine Pelton suivant l'une quelconque des revendications 1 à 6, caractérisée en ce que la cloison (8) est raccordée hermétiquement au carter (3) à l'extérieur de l'ouverture (12) et de la partie creuse destinée à recevoir la roue de turbine.

8. Turbine Pelton suivant l'une quelconque des revendications 1 à 7, caractérisée en ce que la cloison (8) présente dans la zone d'injection et d'évacuation de liquide (9) une voussure de déviation du jet d'eau écartée des augets (2) et affecte dans la zone de ventilation (11) une forme de toit tombant de la roue de turbine, qui présente une pente dirigée dans la direction de l'ouverture (12).

9. Turbine Pelton suivant l'une quelconque des revendications 1 à 8, caractérisée en ce que la cloison (8) est réalisée en matériau synthétique.

10. Turbine Pelton suivant l'une quelconque des revendications 1 à 8, caractérisée en ce que la cloison (8) fait partie intégrante du carter (3) et/ou du couvercle de carter (15).

11. Turbine Pelton suivant l'une quelconque des revendications 1 à 10, caractérisée en ce qu'un double canal de guidage (17) implanté au sein de la zone de ventilation (11) tangentiellement à la roue de turbine au voisinage des augets (2) dévie le flux de gaz qui s'échappe radialement et le renvoie en arc de cercle à la base des augets (2).

12. Procédé d'exploitation d'une turbine Pelton conforme aux revendications 1 à 11, caractérisé en ce qu'elle est mise en oeuvre à des vitesses et/ou sous des charges variables.

Fig. 2

Fig. 1

# Fig.3